# EUROPEAN PATENT APPLICATION

(11) **EP 1 547 973 A1**
(43) Date of publication of application: **29.06.2005**
(21) Application number: 03794201.8
(22) Date of filing: 03.09.2003
(51) Int. Cl.: C01B 31/02, H01G 9/058, H01M 4/02, H01M 10/40

(54) **CARBON FINE POWDER COATED WITH METAL OXIDE, METAL NITRIDE OR METAL CARBIDE, PROCESS FOR PRODUCING THE SAME, AND SUPERCAPACITOR AND SECONDARY BATTERY USING THE CARBON FINE POWDER**

(30) Priority: 05.09.2002 JP 2002260671; 05.09.2002 JP 2002260674; 05.09.2002 JP 2002260677
(71) Applicant: National Institute of Advanced Industrial Science and Technology, Tokyo 100-8921 (JP)
(72) Inventor: HOMMA, Itaru, Tsukuba-shi, Ibaraki 305-8568 (JP); HIBINO, Mitsuhiro, Tsukuba-shi, Ibaraki 305-8568 (JP); ZHOU, Haoshen, Tsukuba-shi, Ibaraki 305-8568 (JP)
(74) Representative: Zimmermann, Gerd Heinrich
(86) International application number: PCT/JP2003/011252
(87) International publication number: WO 2004/022484

(57) **Abstract**

A carbon fine powder is obtained by uniformly coating the surface of a carbon fine powder having a large specific surface area with a uniform thin film layer of a metal oxide, metal nitride or metal carbide as an electrode active substance material through induction of a sonochemical reaction. It is found that the obtained carbon fine powder has a low electrical resistance and shows a rapid faradaic process (pseudo-capacitance) of the surface coating layer. The coated carbon fine powder, a process for producing the same, and a supercapacitor and a secondary battery using the carbon fine powder are disclosed.

## Description

### Technical Field

The present invention relates to a carbon fine powder coated with a metal oxide, a metal nitride or a metal carbide applicable to electrochemical devices such as secondary batteries and capacitors and a process for producing the same. More specifically, the present invention provides a carbon fine powder having an electrochemically active layer uniformly coated in a nanometer level, a process for producing the same, and a supercapacitor and a secondary battery using the carbon fine powder.

### Background Art

An electric double layer capacitor (EDLC) using a carbon fiber electrode has been already commercialized as a high-power electrical storage device. However, it has a large charge and discharge rate but the energy density is extremely low. Thus, the energy density and output density are only about 1 Wh/kg and 1 kW/kg, respectively and hence uses thereof are limited to watches, power supplies for memory backup, and the like. On the other hand, in the case of assumed applications to electric power system such as load leveling, energy regeneration in electric cars, and the like, about one-order improvement of the energy density and output density is required.

In order to realize the improvement, in addition to an approach of improving the performance of EDLC itself, there is a concept of positively utilizing pseudo-capacitance involved in a faradaic process which is overwhelmingly advantageous in view of the energy density.

Namely, since the pseudo-capacitance present on the surface of an electrochemically active material is an electric dual layer capacitance involving a faradaic process, i.e., an electrochemical double layer, it is an characteristic feature that the capacitance has not only a fast charge and discharge rate and also a huge energy storage capacity. Moreover, the concept of a supercapacitor is a secondary battery capable of ultrahigh-speed charge and discharge utilizing a huge pseudo-capacitance mechanism generated by a faradaic process of the surface of an active material and theoretically, a battery possessing both of a high energy density and a high power density are realized. They are called electrochemical capacitors or pseudo-capacitors, which are storage devices having an intermediate performance between a secondary battery and a condenser.

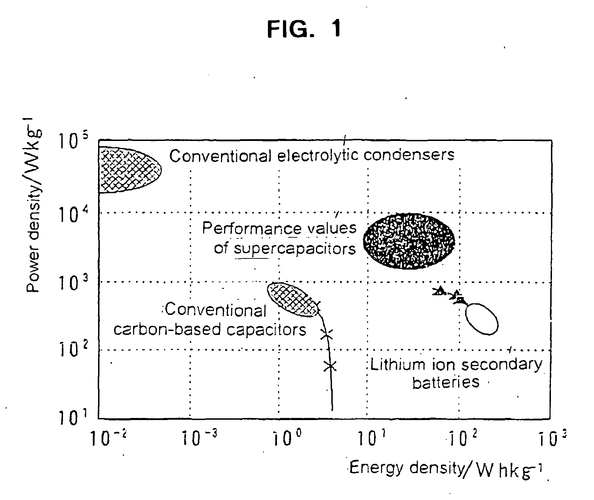

The performance of a large capacity-type capacitor called a supercapacitor or an electrochemical capacitor using a carbon fine powder coated with a metal oxide, a metal nitride or a metal carbide which is a novel material of the present invention aims at performance located in an unprecedented region as shown in a ragon plot in Fig. 1.

It is a characteristic feature that these storage devices have a high power as compared with the currently mainstream lithium secondary batteries and have a high energy density as compared with condensers and carbon-based capacitors. For example, in the case of energy regeneration in electric cars which is thought to be an important technology in future, there is required a large capacity-type capacitor possessing both of an energy density of about 30 Wh/kg and a power density of about 3 kW/kg.

Moreover, the capacitor cannot be used in industrial applications unless it realizes a high-speed charge and discharge with a good cycle life performance.

Conventional storage batteries or recently mainstream lithium secondary batteries realize a high energy density by generating an electromotive reaction through intercalation of lithium ions into the solid of an active material and using the oxidation-reduction capacity of an active material-constituting element.

However, the intercalation of the lithium ions in the solid is generated by diffusion of ions in the solid and thus is an extremely slow process. Therefore, in the conventional secondary batteries, a considerable time is required for charge and discharge and thus a high-speed charge and discharge is impossible.

Accordingly, it is impossible to use the conventional secondary batteries in the energy regeneration in electric cars and the load leveling and as a countermeasure for momentary voltage dip. Also, it is impossible to use it in other electric devices which require a high power density.

Moreover, irreversible changes such as a change in the crystalline structure of the active material and increase in various lattice defects are generated by the increase of lithium ion concentration in the active material and may cause deterioration of various cycle life performances, such as capacitance decrease and potential effect in the charge and discharge cycle and increase in internal resistance.

On the other hand, an electric double layer capacitor using no intercalation mechanism can achieve electrical storage by adsorbing ions onto the surface of a polarizable electrode having a large specific surface area, e.g., a carbon having a high specific surface area to form an electrostatic electric double layer at a solid-liquid interface.

Therefore, since it achieves electrical storage through adsorption and desorption of these surface ions, charge and discharge can be performed at an extremely fast rate. Thus, it makes possible to perform charge and discharge in a high power density.

However, a storage capacity only by the ion adsorption is small and is, for example, one hundredth or less of that of a secondary battery.

In order to improve the capacity, it is intended to produce a high capacity one using a carbon electrode having a large specific surface area but the capacity is also limited to about 100 F/g. Moreover, in the case of using a carbon electrode having an extremely large specific surface area such as 2,000 m²/g or more, part of pores cannot adsorb the ions, so that the whole surface does not necessarily contribute the double layer capacitance and hence the surface area of the electrode and the capacity becomes not proportional to each other.

These contrasting storage devices have different performances from each other and are used for different energy applications, i.e., the secondary battery as a storage device of a high energy density type for about 1,000 cycles and the capacitor as a storage device of a high power density type for 100,000 cycles or more.

Thus, there is not yet realized such a storage device satisfying both of the energy density and power density as developed in the present invention.

### Disclosure of the Invention

### Problems to be solved by the invention:

As a result of the extensive studies for solving the above problems, the present inventors have found a novel carbon fine powder having a thin film of an active material on the surface, i.e., a carbon fine powder coated with a metal oxide, a metal nitride or a metal carbide.

A carbon fine powder coated with a metal oxide, a metal nitride or a metal carbide is obtained by using a pseudo-capacitance mechanism derived from a faradaic process of the surface of an electrode active material having a high specific surface area, the powder being capable of providing a supercapacitor and a secondary battery possessing both of a high energy density and a high power density.

The inventors have found that such a carbon fine powder having a thin film of an electrode active material on the surface is obtained by a process of uniformly coating the surface of a carbon with a fine film layer of the battery active material using a sonochemical reaction.

The composite material wherein the surface is uniformly coated with the active material not only is used as a material for secondary batteries and a material for capacitors but also may possibly used in various uses such as fuel cell electrodes, hydrogen absorbing materials, hydrogen producing electrodes, electrodes for electrolysis, anticorrosive materials, and various catalyst materials.

### Means for solving the problems:

The present invention provides a composite material wherein a thin film layer of a metal oxide, a metal nitride or a metal carbide is uniformly coated on the surface of a carbon fine powder using a sonochemical reaction, a process for producing the same, and a supercapacitor and a secondary battery using the carbon fine powder.

Namely, the present invention is a carbon fine powder coated with a metal oxide, a metal nitride or a metal carbide, wherein a thin film layer of the metal oxide, the metal nitride or the metal carbide is uniformly coated on the surface of a carbon fine powder having a large specific surface area. Such a carbon fine powder coated with a metal oxide, a metal nitride or a metal carbide can be produced by uniformly coating a thin film layer of metal fine particles on the surface of carbon fine particles by causing heterogeneous nucleus generation and growth on the surface of carbon fine particles through irradiating a dispersion composed of particles of the metal oxide, the metal nitride or the metal carbide or a metal ion, a metal complex, or a precursor molecule, the carbon fine particles, and a solvent with an ultrasonic wave.

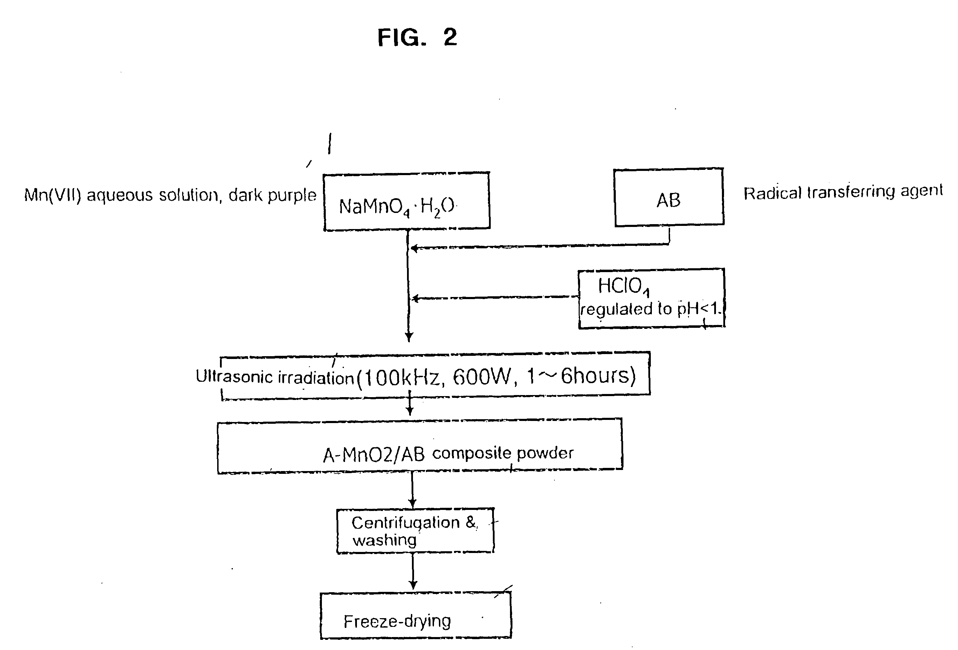

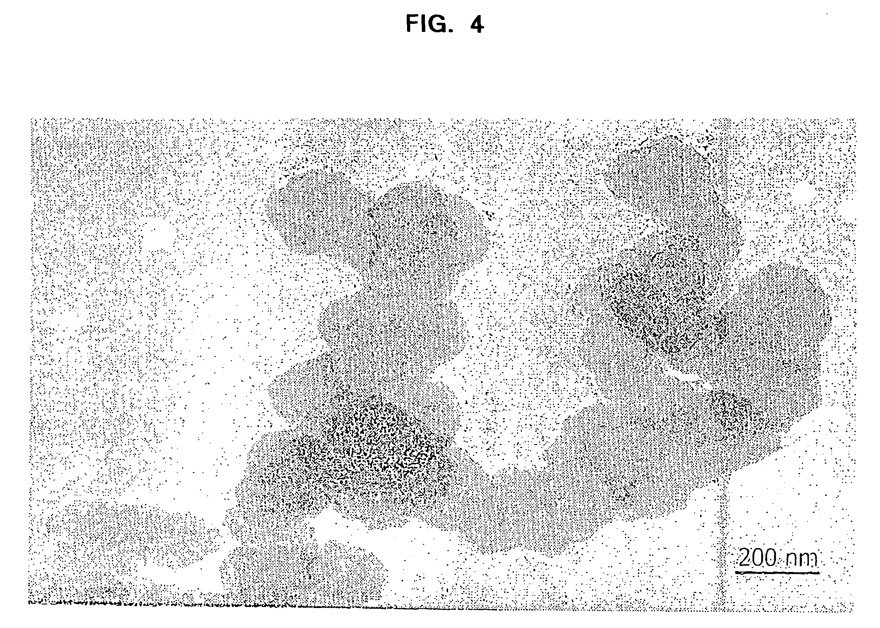

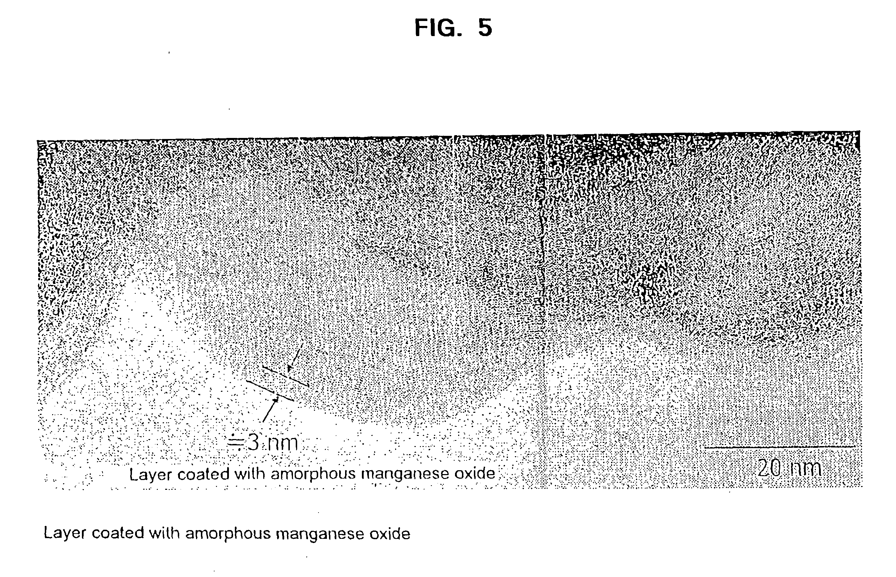

In the sonochemical reaction, it is said that ultrahigh temperature and high pressure conditions such as 5,000°C or higher and 1,000 atm or higher are generated at the time when a hot spot formed by ultrasonic irradiation is imploded. For example, as shown in Fig. 2, in the case of using manganese oxide, water is decomposed and activated to form a hydrogen radical (H) and a hydroxyl radical (OH) in the vicinity of the hot spot. The hydroxyl radical is a reductive active species and reduces a permanganate ion (MnO₇⁻) present in the aqueous solution to form manganese oxide particles uniformly in the solution. In the present invention, as a result of the use of a carbon fine powder having a large specific area, the hydroxyl radical and the other active species are adsorbed on the surface of the carbon having a large specific surface area prior to the induction of uniform reactions and act as active sites for heterogeneous reactions. After the adsorption of these active species formed in the solution on the carbon surface, they activate the carbon atoms on the surface and these activated carbon atoms act as starting points of forming a thin-film coating layer of amorphous manganese oxide, whereby the carbon surface is uniformly coated with the thin-film layer. As a result, the surface of the carbon fine particles are coated with a uniform film as shown in electron microscopic photographs in Fig. 4 and Fig. 5.

The inventors have confirmed that the carbon fine powder coated with a metal oxide, a metal nitride or a metal carbide, which is uniformly coated with a thin film layer of the metal oxide, the metal nitride or the metal carbide, shows useful properties as a material constituting a supercapacitor and a secondary battery.

### Brief Description of the Drawings

Fig. 1 is a drawing showing performance of large capacity-type capacitors.
Fig. 2 is a pattern diagram for a sonochemical synthesis.
Fig. 3 is a flow sheet for a sonochemical synthesis.
Fig. 4 is a transmission electron microscopic photograph of the carbon fine particles of Example 40.
Fig. 5 is an enlarged view of the transmission electron microscopic photograph of the carbon fine particles of Example 40.
Fig. 6 is an X-ray diffraction pattern of the carbon fine particles of Example 40.
Fig. 7 is drawings showing electrochemical measurements of an electrode coated with manganese oxide-coated carbon fine particles and a conventional electrode.
Fig. 8 is a drawing showing a relationship between the capacity of an electrode coated with manganese oxide-coated carbon fine particles and a scan rate of potential.
Fig. 9 is a constitutional drawing of a supercapacitor battery.
Fig. 10 is a constitutional drawing of a secondary battery.

### Best Mode for Carrying Out the Invention

As the metal oxide, the metal nitride or the metal carbide for use in the present invention, use can be made of one or at least two of metal oxides, metal nitrides or metal carbides selected from the groups consisting of manganese, vanadium, molybdenum, tungsten, titanium, iron, copper, silver, nickel, chromium, aluminum, tin, lead, silicon, germanium, gallium, indium, zinc, cobalt, niobium and tantalum. In particular, it is confirmed that manganese oxide has satisfactory electrochemical properties.

Moreover, the crystal structure of the metal oxide, the metal nitride or the metal carbide for use in the present invention may be a crystalline phase, a amorphous phase, or a microcrystalline phase.

Furthermore, according to one preferable example of the present invention, the intensity of the ultrasonic wave is in the range of 1 mW/cm³ to 1 kW/cm³, the frequency is in the range of 1 kHz to 1 MHz, and the size of a reaction vessel is in the range of 1 cm³ to 1 m³.

As the solvent for use in the present invention, use can be made of one or at least two selected from the group consisting of water, alcohol, ketone, ether, ester, organic acid, amine and amino alcohol.

In the present invention, water and alcohols are preferably used. As the alcohols, use can be made of methyl alcohol, ethyl alcohol, isopropyl alcohol, butyl alcohol, and the like.

Moreover, in the present invention, the pH of the dispersion composed of the metal oxide fine particles, metal nitride fine particles or metal carbide fine particles, the carbon fine particles, and a solvent can be regulated using a known pH regulator.

In the supercapacitor of the present invention, use can be made of an electrode obtained by applying and drying a resin composition containing a carbon fine powder coated with a metal oxide, a metal nitride or a metal carbide on a reticulate mesh of an electrode metal. As the resin constituting the resin composition, any one of polytetrafluoroethylene (PTFE), polyethylene, and polypropylene can be used. Moreover, the resin can preferably further contain fine particles of a conductive material. As the conductive material, use can be made of one or at least two of carbon, sold, silver, copper, nickel and palladium.

The supercapacitor of the present invention can use such an electrode as at least one of a cathode and an anode of the supercapacitor.

Furthermore, the carbon fine powder coated with a metal oxide, a metal nitride or a metal carbide of the present invention can be used as an interelectrode material between a cathode and an anode. Additionally, the electrolyte of the supercapacitor may be an aqueous electrolyte or a nonaqueous electrolyte. As an electrolyte ion, use can be made of one or at least two selected from a proton, a lithium ion, a magnesium ion, a potassium ion, a sodium ion, a calcium ion, a barium ion, a yttrium ion, a lanthanum ion, an ammonium ion and an organoammonium ion.

In the high-performance secondary battery of the present invention, the carbon fine powder coated with a metal oxide, a metal nitride or a metal carbide of the present invention can be used as a charge-accumulating and -releasing material.

Furthermore, an electrode obtained by molding a resin composition containing the carbon fine powder coated with a metal oxide, a metal nitride or a metal carbide of the present invention can be used. Preferably, use can be made of an electrode obtained by applying and drying a resin composition containing a carbon fine powder coated with a metal oxide, a metal nitride or a metal carbide on a reticulate mesh of an electrode metal. As the resin constituting the resin composition, any one of polytetrafluoroethylene (PTFE), polyethylene, and polypropylene can be used. Moreover, the resin can preferably further contain fine particles of a conductive material. As the conductive material, use can be made of one or at least two of carbon, gold, silver, copper, nickel and palladium. Such an electrode can be used as a cathode or an anode in the present invention.

Additionally, in the high-performance secondary battery of the present invention, the carbon fine powder coated with a metal oxide, a metal nitride or a metal carbide of the present invention can be also used as an interelectrode material between a cathode and an anode.

### Examples:

The followings will show specific examples of the present invention but the present invention is by no means limited thereto.

### Examples 1 to 42

### Production of carbon fine particles coated with a thin film layer of amorphous manganese oxide layer on the surface:

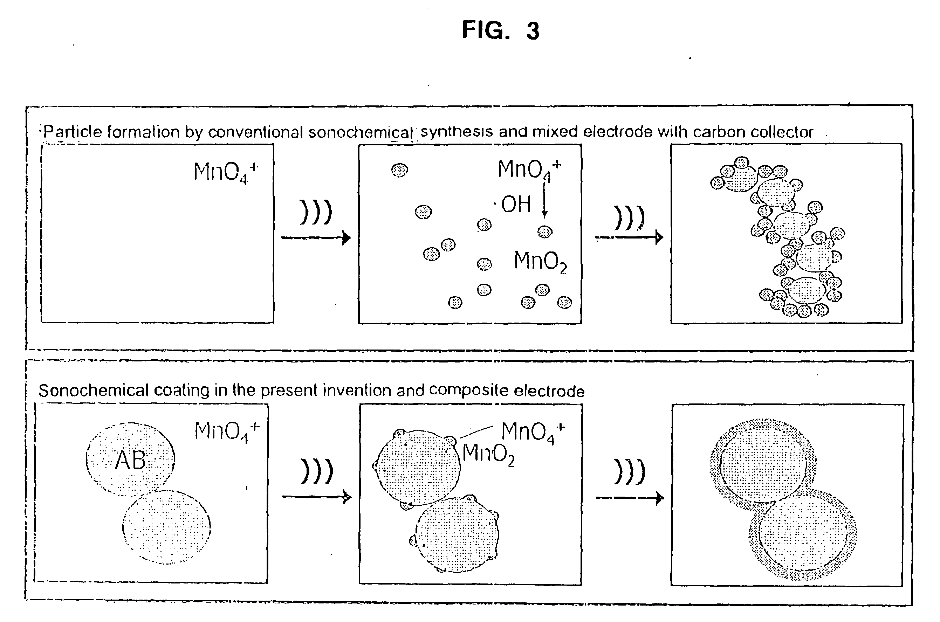

Carbon fine particles were produced in accordance with the procedure shown in Fig. 3.

Potassium permanganate (KMnO₇) containing a heptavalent manganese ion was dissolved in water to form an aqueous potassium permanganate solution having a manganese ion concentration of 0.001M to 0.1M. The aqueous solution was mixed with an acetylene black having a high specific surface area (60 m²/g, measured by BET) to form a dispersion solution of both materials. The mixed solution was irradiated with an ultrasonic wave to reduce potassium permanganate (KMnO₇) in the solution, whereby particles wherein the surface of the acetylene black was coated with a thin film layer of amorphous manganese oxide were obtained.

In the present Example, the intensity of the ultrasonic wave was changed within the range of 1 mW/cm³ to 1 kW/cm³ and the irradiation time of the ultrasonic wave was changed within the range of I minute to 24 hours.

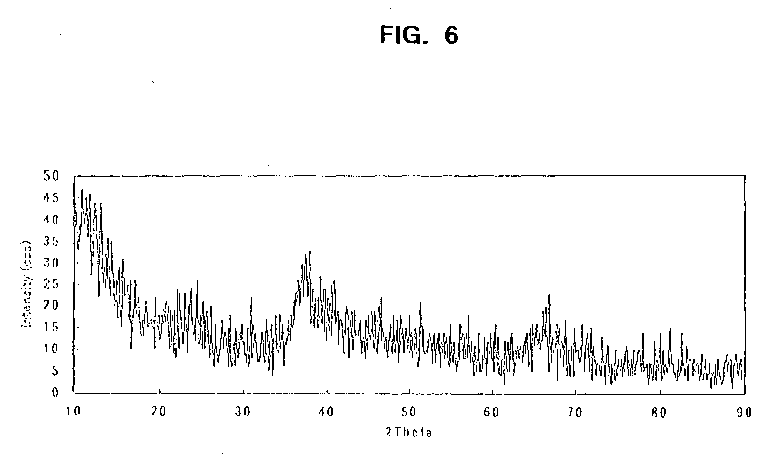

In the mixed solution, not only water but also alcohols can be mixed. In the Example, the aqueous potassium permanganate solution was prepared at a concentration of 0.01M and was directly subjected to ultrasonic treatment at 100 kHz and 600W for 6 hours without regulation of the initial pH to synthesize particles coated with a thin film layer of amorphous manganese oxide in the aqueous solution. These synthesized particles can be obtained as a composite powder via drying and dehydration treatment at 120°C for about 12 hours. Fig. 6 shows a result of X-ray diffraction analysis of the particles coated with a thin film layer of amorphous manganese oxide synthesized in the present Examples.

In the Examples, the pH was changed within the range of 0 to 9.

Table 1 describes synthetic conditions carried out in the present invention.

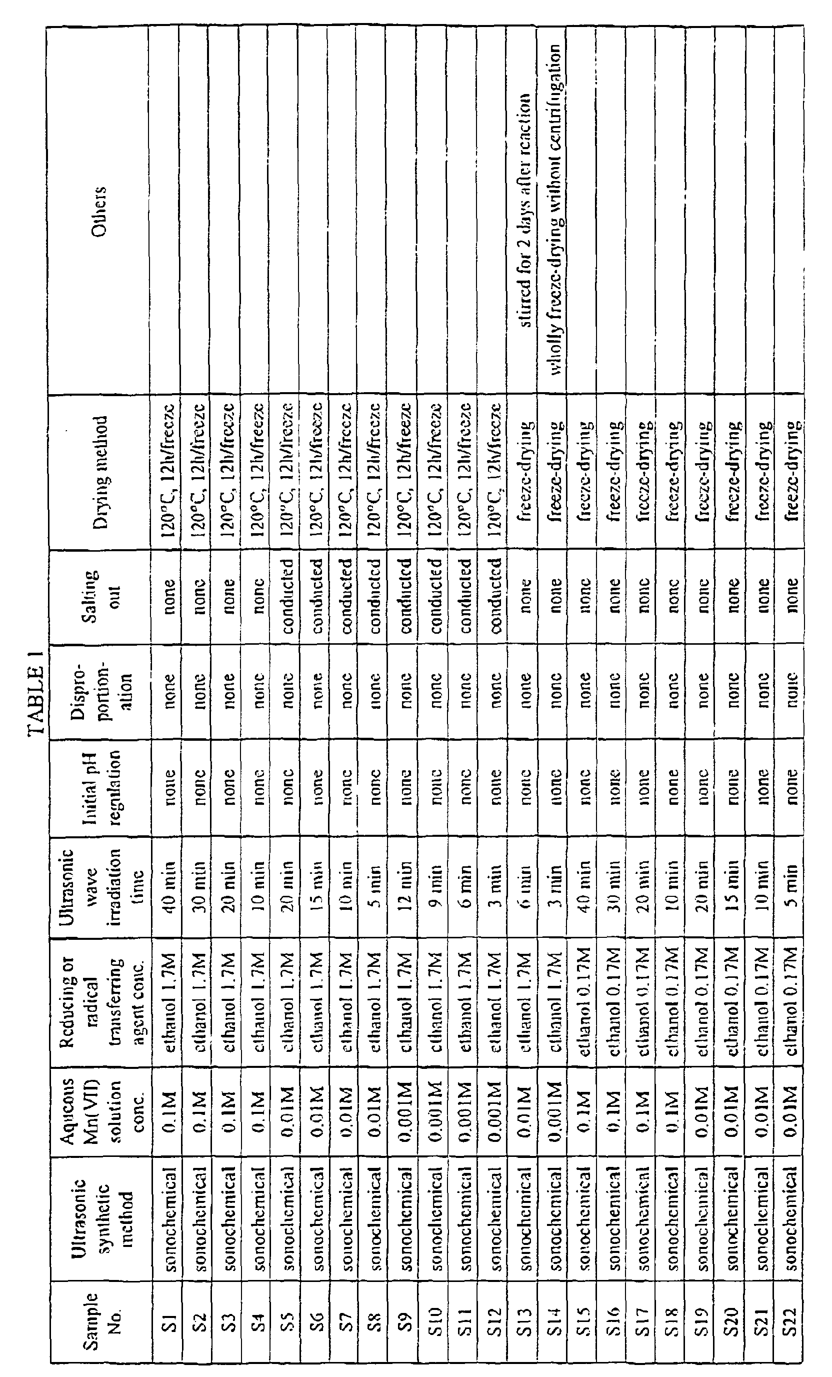

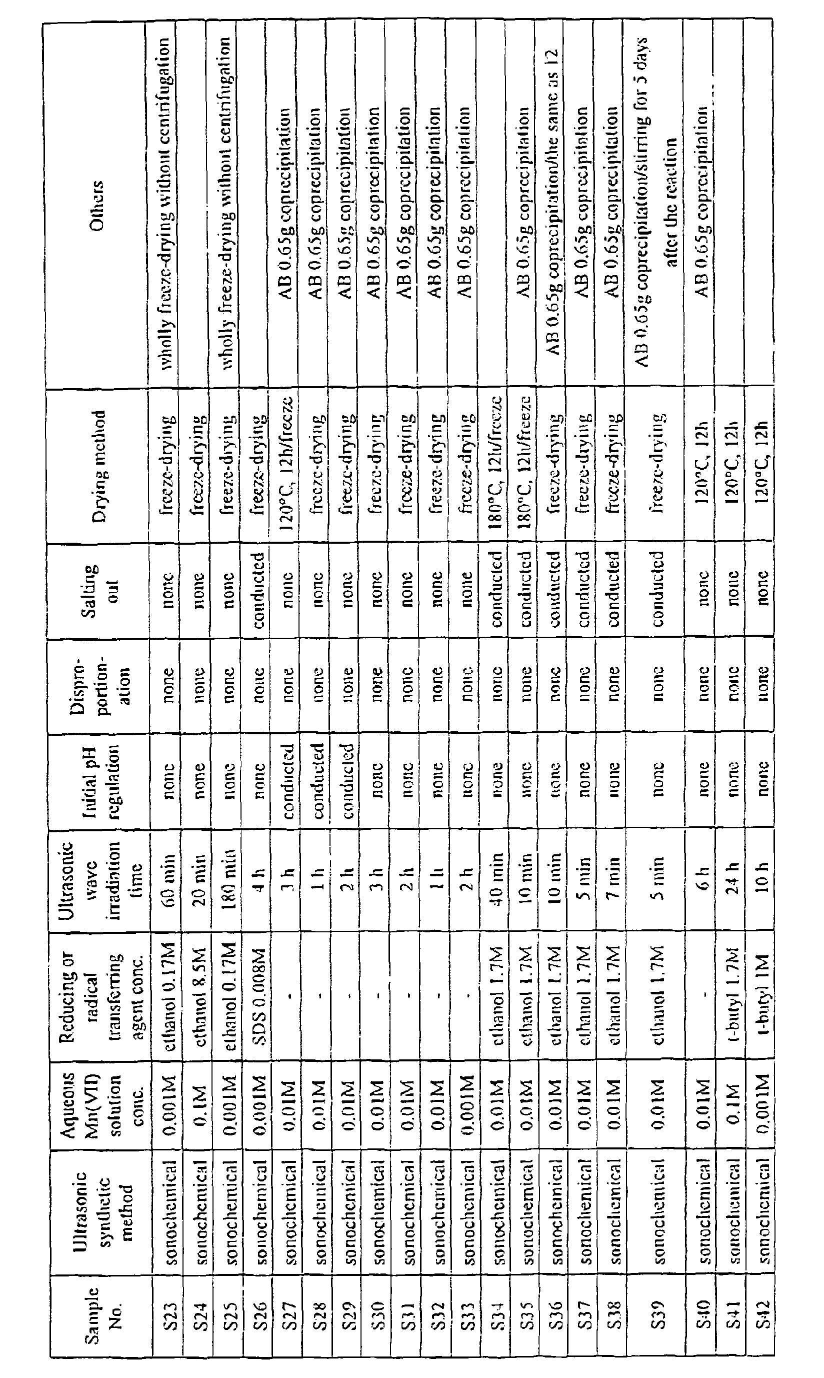

In the table, t-butyl alcohol was utilized as a radical transferring agent.
CVHA means a cyclic voltammogram (potential/current measurement)
TEM means a transmission electron microscope.
SEM means a scanning electron microscope.
TG means a thermogravimetry.

The sonochemical reaction in the present invention is assumed to be a novel coating mechanism as shown in the lower drawing in Fig. 2. Namely, it is considered that permanganate ions are adsorbed on the carbon surface activated with the ultrasonic irradiation and cause surface reactions to form an coating layer of amorphous oxide and to cover the carbon surface with the layer, whereby the carbon fine particles coated with the thin film layer of amorphous manganese oxide are obtained.

For comparison, an example of producing manganese oxide fine particles by the conventional method is shown in Table 2.

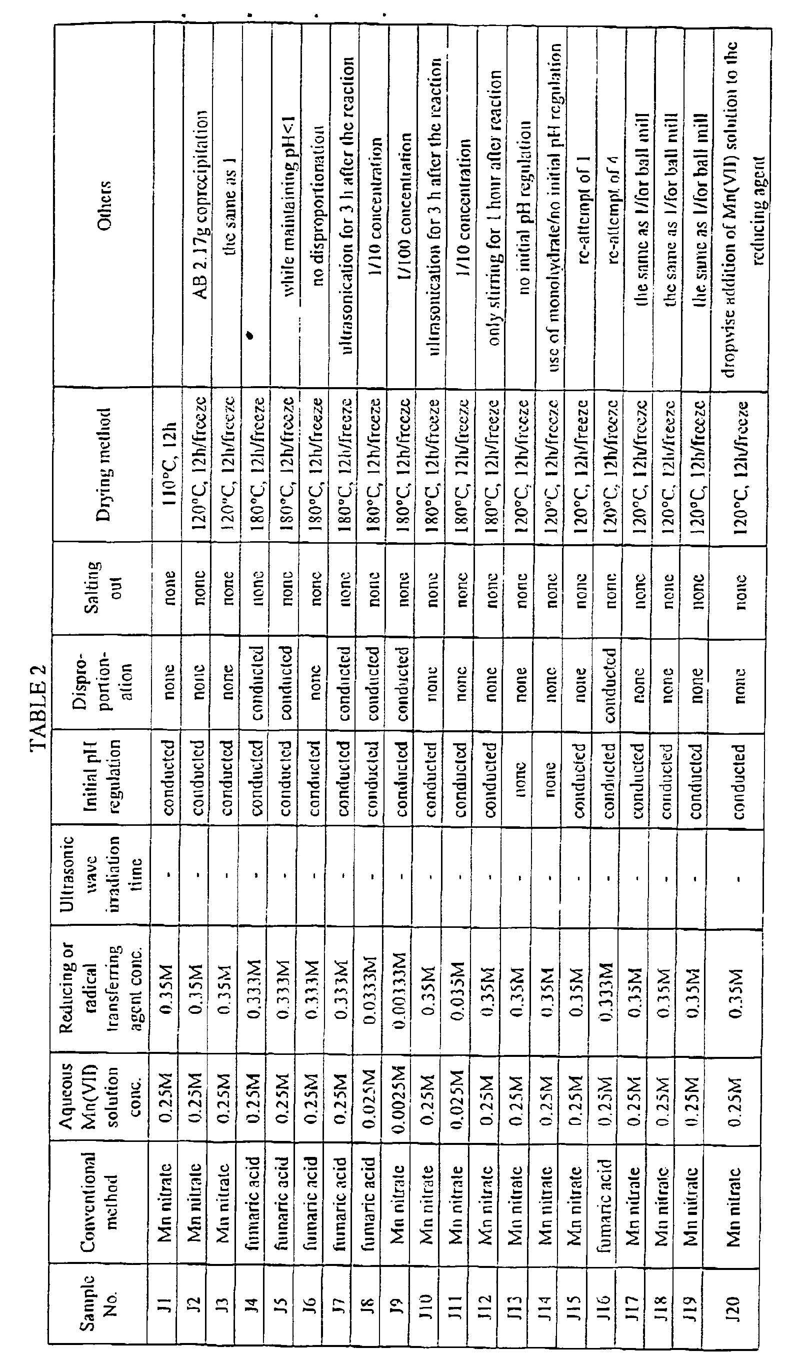

Fig. 4 shows a transmission electron microscopic photograph of the composite electrode produced by the sonochemical reaction of Example 40. It is understood that the surface of an acetylene black (AB) having a diameter of about 50 nm is uniformly coated with an amorphous manganese oxide layer.

Fig. 5 shows an enlarged view of the transmission electron microscopic photograph. It was found that the carbon surface was coated with an amorphous manganese oxide layer having a thickness of about 3 nm. It was found that the coating layer covered evenly the surface of the carbon particles and carbon fine particles coated with a uniform and dense active material layer were produced.

Fig. 6 shows a result of X-ray diffraction analysis of the composite electrode. It was found that no definite diffraction peak derived from a crystalline structure was observed and the formed coating layer was an amorphous structure. It was also found that the coating layer was composed of manganese and oxygen based on the composition analysis carried out at the same time. Thus, it is considered that the coating layer of the active material thin film produced by the sonochemical reaction which is the present invention is a manganese oxide having an amorphous structure.

### Example 43

Carbon fine particles coated with a thin film layer of a silicon carbide layer was produced in the same manner as in Example I except that an alkoxy silane was used instead of potassium permanganate (KMnO₇). The ultrasonic irradiation conditions were 100 kHz, 600W, and 1 hour.

The carbon fine particles coated with a thin film layer of a silicon carbide layer dispersed in the solution were separated and isolated as a solid precipitate by centrifugation. It was washed with distilled water several times to remove impurity ions (potassium ions, unreacted permanganate ions, and other common impurity ions) by washing and was subjected to a drying and dehydration treatment at 120°C for about 12 hours to obtain carbon fine particles coated with a thin film layer of a silicon carbide layer.

Furthermore, it was confirmed that the same production can be effected with a metal oxide, metal nitride or metal carbide, such as chromium oxide, aluminum oxide, silver oxide, copper oxide, nickel oxide, manganese nitride, tungsten nitride, titanium nitride, iron nitride, silver nitride, titanium nitride, iron carbide, copper carbide, manganese carbide, or aluminum carbide.

The followings will show an example of a supercapacitor.

### Example 44

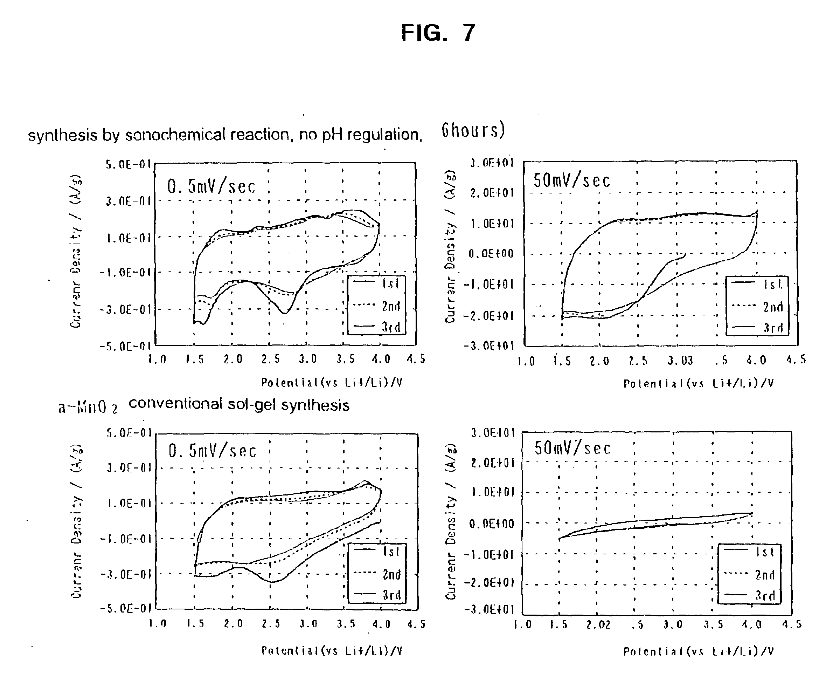

Fig. 7 shows electrochemical properties of an electrode coated with a manganese dioxide thin-film coating layer produced by the sonochemical reaction obtained in Example 1 and an electrode coated with a manganese dioxide thin-film coating layer produced by a conventional method. Results of electrochemical measurements of the electrodes in a triode cell are shown in Fig. 7. A lithium electrode was used as a counter electrode, a lithium electrode was also used as a reference electrode, and a mixture of EC+DEC with LiClO₄ was used as an electrolyte.

In the measurement of a cyclic volutammogram, current-potential properties were shown when the scan potential was changed from 1.5 V to 4.0 V (vs Li/Li⁺) and the scan rate was changed from 1 mV/sec to 500 mV/sec.

A peak of the cyclic volutammogram derived from the oxidation and reduction of manganese was observed and a capacitor-like response similar to almost rectangular wave was observed in the case of a large scan rate. Since they have a large capacity, they can be considered to be supercapacitor electrodes.

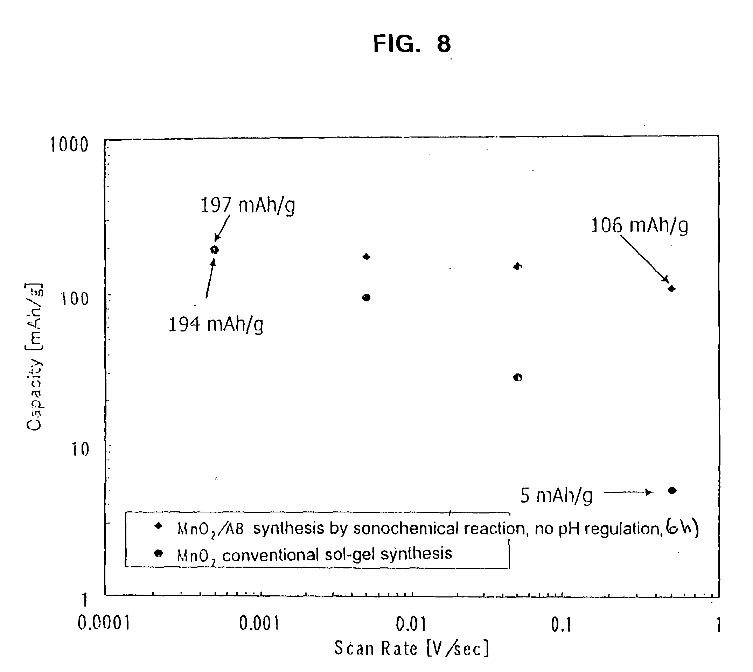

Fig. 8 shows a relationship between the capacity (mAh/g) and the scan rate (V/sec) standardized by net weight of pure manganese oxide in the coating layer determined by subtracting the weight of the acetylene black used as a collector.

It was found that the capacity per the coated active material of the composite electrode produced by the sonochemical reaction was 197 mAh/g at a scan rate of 1 mV/sec but it was 106 mAh/g even at a scan rate of 500 mV/sec. The energy density and power density calculated from the capacity at 500 mV/sec were about 290 Wh/kg and about 210 kW/kg, respectively and thus it was found that it can be utilized as a supercapacitor possessing both of a large energy density and a high power density.

An electrode for a supercapacitor is produced by mixing the acetylene black coated with the coating layer of manganese dioxide thin film further with a carbon powder and a binder polymer and applying the mixture onto a nickel reticulate mesh, followed by drying.

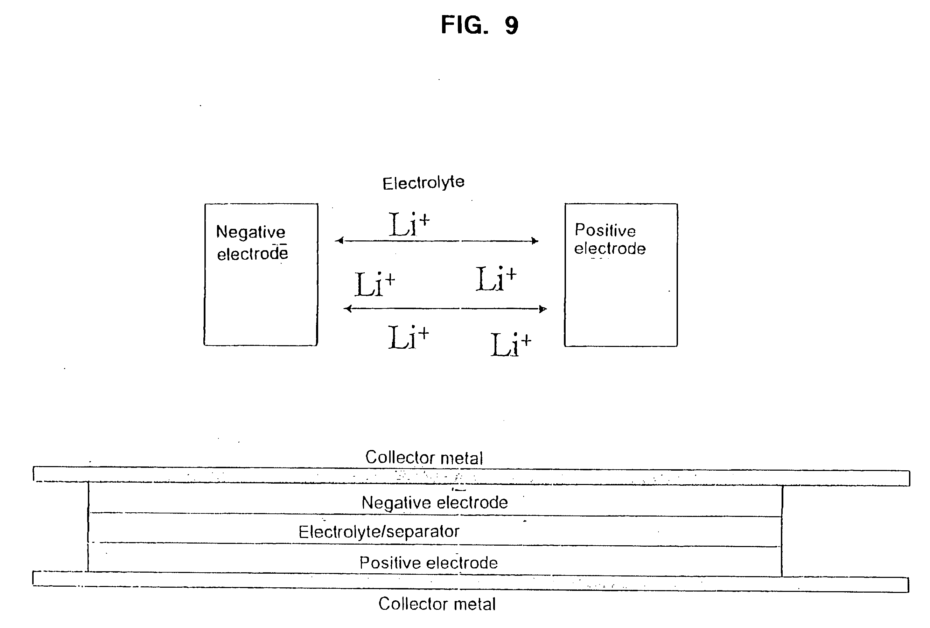

Using such an electrode for a supercapacitor having a large power density, a supercapacitor shown in Fig. 9 can be produced as one example.

Furthermore, according to one preferable example of the present invention, as an electrolyte of the above supercapacitor battery, a liquid electrolyte, a gel electrolyte, a polymer electrolyte, and a solid electrolyte can be used. Specifically, as the liquid electrolyte, use can be made of LiPF₆, LiClO₄, LiSCN, LiAlCl₄, LiBF₄, LiN(CF₃SO₂)₂, LiCF₃SO₃, LiAsF₆, and LiSbF₆.

The followings will further show an example of a secondary battery.

### Example 45

Fig. 7 shows electrochemical properties of an electrode coated with a manganese dioxide thin-film coating layer produced by the sonochemical reaction obtained in Production Example 1 and an electrode coated with a manganese dioxide thin-film coating layer produced by a conventional method. Results of electrochemical measurements of the electrodes in a triode cell are shown in Fig. 7. A lithium electrode was used as a counter electrode, a lithium electrode was also used as a reference electrode, and a mixture ofEC+DEC with LiClO4 wa.s used as an electrolyte.

In the measurement of a cyclic volutammogram, current-potential properties were shown when the scan potential was changed from 1.5 V to 4.0 V (vs Li/Li⁺) and the scan rate was changed from 1 mV/sec to 500 mV/sec.

A peak of the cyclic volutammogram derived from the oxidation and reduction of manganese was observed and a capacitor-like response close to almost rectangular wave was observed in the case of a large scan rate. Since they have a large capacitance, they can be considered to be supercapacitor electrodes.

Fig. 8 shows a relationship between the capacity (mAh/g) and the scan rate (V/sec) standardized by net weight of pure manganese oxide in the coating layer determined by subtracting the weight of the acetylene black used as a collector.

It was found that the capacity per the coated active material of the composite electrode produced by the sonochemical reaction was 197 mAh/g at a scan rate of 1 mV/sec but it was 106 mAh/g even at a scan rate of 500 mV/sec. The energy density and power density calculated from the capacity at 500 mV/sec were about 290 Wh/kg and about 210 kW/kg, respectively and thus it was found that it can be utilized as a supercapacitor possessing both of a large energy density and a high power density..

The electrode is produced by mixing the acetylene black coated with the coating layer of manganese dioxide thin film further with a carbon powder and a binder polymer and applying the mixture onto a nickel reticulate mesh, followed by drying.

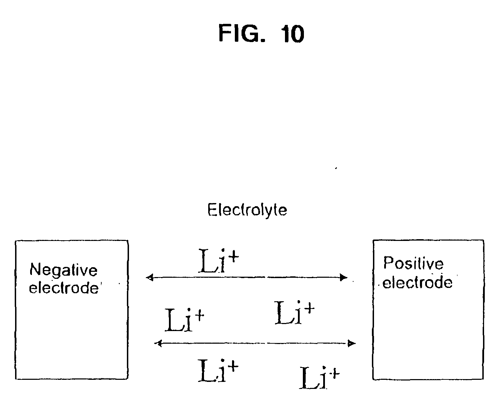

Using such an electrode material having a large power density, a high-performance secondary battery shown in Fig. 10 can be produced.

### Industrial Applicability

The present invention can provide carbon fine particles uniformly coated with a thin film layer of a metal oxide, a metal nitride or a metal carbide as shown in Fig. 4 and Fig. 5, which are novel materials. The carbon fine particles have properties shown in Fig. 7 and Fig. 8. Manganese oxide-coated carbon fine particles as a typical example are enormously excellent in performance when used as a supercapacitor and thus are promising as an electrode material capable of achieving rapid charge and rapid discharge.

## Claims

1. A carbon fine powder coated with a metal oxide, a metal nitride or a metal carbide, in which a thin film layer of the metal oxide, the metal nitride or the metal carbide is uniformly coated on the surface of the carbon fine powder having a large specific surface area.

2. The carbon fine powder coated with a metal oxide, a metal nitride or a metal carbide according to claim 1, wherein the thin film layer of the metal oxide, the metal nitride or the metal carbide to be coated has a thickness of from 1 nm to 1,000 nm.

3. The carbon fine powder coated with a metal oxide, a metal nitride or a metal carbide according to claim 1, wherein the metal oxide, the metal nitride or the metal carbide is one or at least two of metal oxides, metal nitrides or metal carbides selected from the groups consisting of manganese, vanadium, molybdenum, tungsten, titanium, iron, copper, silver, nickel, chromium, aluminum, tin, lead, silicon, germanium, gallium, indium, zinc, cobalt, niobium and tantalum.

4. The carbon fine powder coated with a metal oxide, a metal nitride or a metal carbide according to claim 1, wherein the specific surface area of the carbon fine powder is from 50 m²/g to 3,500 m²/g.

5. The carbon fine powder coated with a metal oxide, a metal nitride or a metal carbide according to claim 1, wherein the metal oxide, the metal nitride or the metal carbide in the thin film layer has a crystal structure of a crystalline phase, an amorphous phase or a microcrystalline phase.

6. A process for producing a carbon fine powder coated with a metal oxide, a metal nitride or a. metal carbide, which comprises irradiating an ultrasonic wave on a dispersion comprising a metal oxide fine particle, a metal nitride or metal carbide, a carbon fine particle and a solvent to cause a sonochemical reaction on the surface of the carbon fine particle to thereby uniformly forming a thin film layer of the metal fine particle on the surface of the carbon fine particle.

7. The process for producing a carbon fine powder coated with a metal oxide, a metal nitride or a metal carbide according to claim 6, wherein the ultrasonic wave has a frequency of from 1 kHz to 1 MHz, and the irradiated ultrasonic wave in the solution has an energy density of from 1 mW/cm³ to 1 kW/cm³.

8. The process for producing a carbon fine powder coated with a metal oxide, a metal nitride or a metal carbide according to claim 6 or 7, wherein the solvent is one or at least two selected from the group consisting of water, alcohol, ketone, ether, ester, organic acid, amine and amino alcohol.

9. A supercapacitor which uses the carbon fine powder coated with a metal oxide, a metal nitride or a metal carbide according to any one of claims 1 to 5 as a charge-accumulating and -releasing material.

10. The supercapacitor according to claim 9, which uses an electrode in which a resin composition comprising the carbon fine powder coated with a metal oxide, a metal nitride or a metal carbide according to any one of claims 1 to 5 is molded.

11. The supercapacitor according to claim 9, which uses an electrode in which a reticulate mesh of an electrode metal is coated with a resin composition comprising the carbon fine powder coated with a metal oxide, a metal nitride or a metal carbide and is dried.

12. The supercapacitor using the electrode according to claim 10, wherein the resin is any one of polytetrafluoroethylene (PTFE), polyethylene and polypropylene.

13. The supercapacitor using the electrode according to claim 10, wherein the resin further comprises a conductive material fine particle.

14. The supercapacitor using the electrode according to claim 10, wherein the conductive material is one or at least two of carbon, gold, silver, copper, nickel and palladium.

15. A supercapacitor which uses the electrode for a supercapacitor according to claim 10 as at least one of a cathode and an anode of the supcrcapacitor.

16. A supercapacitor which uses the carbon fine powder coated with a metal oxide, a metal nitride or a metal carbide according to any one of claims 1 to 5 as an interelectrode material between a cathode and an anode.

17. The supercapacitor according to claim 9, wherein an electrolyte is an aqueous electrolyte or a nonaqueous electrolyte.

18. The supercapacitor according to claim 17, which uses one or at least two selected from a proton, a lithium ion, a magnesium ion, a potassium ion, a sodium ion, a calcium ion, a barium ion, a yttrium ion, a lanthanum ion, an ammonium ion and an organoammonium ion as an electrolyte ion.

19. A high-performance secondary battery which uses the carbon fine powder coated with a metal oxide, a metal nitride or a metal carbide according to any one of claims I to 5 as a charge-accumulating and -releasing material.

20. A high-performance secondary battery which uses an electrode in which a resin composition comprising the carbon fine powder coated with a metal oxide, a metal nitride or a metal carbide according to any one of claims 1 to 5 is molded.

21. The high-performance secondary battery according to claim 20, which uses an electrode in which a reticulate mesh of an electrode metal is coated with a resin composition comprising a carbon fine powder coated with a metal oxide, a metal nitride or a metal carbide and is dried.

22. The high-performance secondary battery using the electrode according to claim 20, wherein the resin is any one of polyrtetrafluoroethylene (PTFE), polyethylene and polypropylene.

23. The high-performance secondary battery using the electrode according to claim 20, wherein the resin further comprises a conductive material fine particle.

24. The high-performance secondary battery using the electrode according to claim 23, wherein the conductive material is one or at least two of carbon, gold, silver, copper, nickel and palladium.

25. A high-performance secondary battery, which uses the electrode according to claim 19 or 20 as a cathode or an anode.

26. A high-performance secondary battery, wherein uses the carbon fine powder coated with a metal oxide, a metal nitride or a metal carbide according to any one of claims 1 to 5 as an interelectrode between a cathode and an anode.
